# EUROPEAN PATENT APPLICATION

(11) **EP 1 883 216 A1**
(43) Date of publication of application: **30.01.2008**
(21) Application number: 06015547.0
(22) Date of filing: 26.07.2006
(51) Int. Cl.: H04M 7/00, H04L 29/06, H04M 3/487

(54) **Method and system for enhancing voice calls**

(71) Applicant: Nokia Siemens Networks GmbH & Co. KG, 81541 München (DE)
(72) Inventor: Aspasia, Antoniou, 14231 Nea Ionia Attikis-Athens (GR)
(74) Representative: Kley, Hansjörg

(57) **Abstract**

The proposed invention provides a method and a system for enhancing- voice calls between subscribers (SUBa, SUBb) comprising:
a) by at least one subscribers (SUBa), registering to an intra-call multimedia service (S21);
b) establishing, through a switch (SS), a voice call (S30, S31) between the subscribers (SUBa, SUBb), the subscribers (SUBa, SUBb) comprising at least one registered subscriber (SUBa);
c) by the switch (SS), notifying an application server (MS) about the voice call establishment (S32a);
d) by the application server (MS), establishing a multimedia session (S32b) with the at least one registered subscriber (SUBa);
e) by the application server (MS), streaming of multimedia data (S33) to the al least one registered subscriber (SUBa) within the established multimedia session; and
f) releasing of the voice call and of the multimedia session (S34, S35).

## Description

The present invention relates to a method according the preamble of claim 1 and to a system according the preamble of claim 9.

Nowadays, telephone operators are looking for ways to offer new services in addition to the traditional voice calls they offer. By offering new services to their voice customers, operators are able to increase their revenue streams.
Thus, it is desirable to enable telephone operators to provide their voice customers with ways of enhancing the traditionally offered phone-calls with additional functionalities.

It is therefore aim of the present invention to provide a method and a system enabling voice calls to be enhanced with additional functionalities.

The aforementioned aim is achieved by a method and a system for enhancing voice calls between subscribers in a communications system comprising a first subscriber, a second subscriber, a switch and an application server; the invention characterized in that it:
a) by at least one of the subscribers, registering to an intra-call multimedia service;
b) establishing, through the switch, a voice call between the subscribers, the subscribers comprising at least one registered subscriber;
c) by the switch , notifying the application server about the voice call establishment;
d) by the application server, establishing a multimedia session with the at least one registered subscriber;
e) by the application server, streaming of multimedia data to the al least one registered subscriber (SUBa) within the established multimedia session; and
f) releasing of the voice call and of the multimedia session.
   The invention may preferably further comprise:
g) by the switch, sending information to at least one subscriber about the intra-call multimedia service; and or
h) by the registered subscriber, de-registering from the intra-call multimedia service.

Further advantageous embodiments of the present invention are given below (each alone or in any possible combination):
- the subscribers may be SIP or HS323 subscribers and wherein the voice call is a VoIP call;
- the subscribers SUBa, SUBb may be ISDN or VoDSL subscribers.
- the voice call may be a voice-video call.

In the invention the content of the multimedia data may be conveniently selected from the group consisting of:
- informational content;
- recreational content;
- advertising content.

In the invention item d) may be performed via SIP protocol and the switch may be a SIP softswitch; and item d) comprises:
d1) by the application server, sending to the softswitch a "INVITE" SIP method comprising in its SDP part a multimedia content parameter;
d2) by the softswitch, sending to the at least one registered subscriber a "INVITE" SIP method comprising in its SDP part a multimedia content parameter;
d3) by the at least one registered subscriber, responding to the softswitch with a "200 OK" SIP response.

The proposed invention minimizes the enhancements required to the existing network systems. In fact, the proposed solution does not require any hardware modification at the subscriber side.

In case SIP protocol is used between the application server and the registered subscriber, the only required modification is the introduction of an additional parameter in the header of the exchanged "NOTIFY" SIP methods.

With the proposed invention, the network is not overloaded with superfluous multimedia transmission, since the intra-call multimedia service transmission occurs only after a phone call has been initiated.

The proposed invention renders phone calls more user-friendly, tempting and interactive to the end-users.
In fact, the end-customers registered to the intra-call multimedia service according to the proposed invention, are able to receive, while talking on the phone, a variety of informational content.

The proposed invention allows operators to offer to their end-customers the possibility to add a new functionality to their voice calls.

The proposed invention allows operators to send, via the streamed multimedia data, informational content to the end-users. For example, this information content may include promotional/advertising content.

By sending promotional/advertising content to the end-user, via the proposed invention, the operators are advantageously enabled to increase their revenue streams. In fact, the promotional/advertising content sent to end-users may be paid by companies interested to promote/advertise their products to end-users.

Moreover, by adding a new type of revenue stream to the offered phone calls, operator may be able to reduce the price of phone calls to the end-users who are registering to the intra-call multimedia service. This, in turn, may conveniently lead to an increase of the customer base of the phone operators.

The invention will now be described in preferred but not exclusive embodiments with reference to the accompanying drawings, wherein:
- Figure 1: illustrates a block diagram of an example embodiment according to the present invention in an IP network scenario;
- Figure 2: illustrates a SIP messaging sequence of a further example embodiment according to the present invention;
- Figure 3: illustrates a SIP messaging sequence of a further example embodiment according to the present invention.

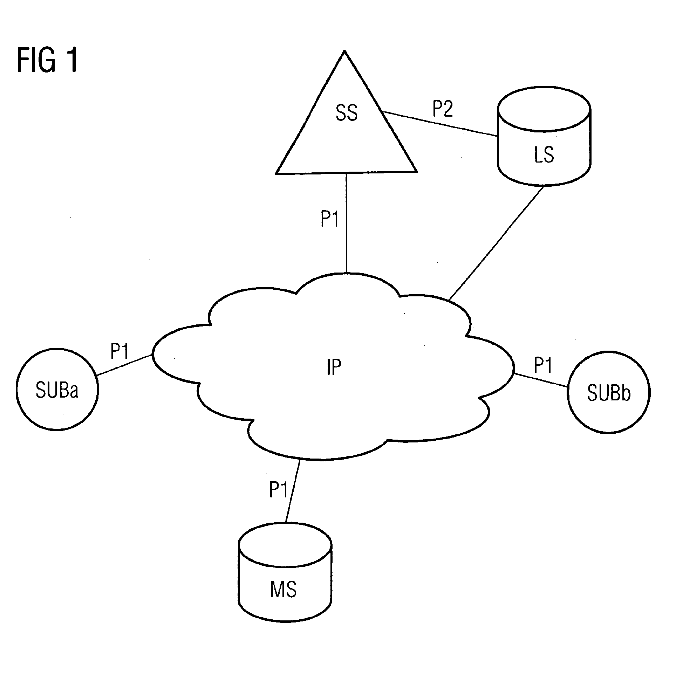

Figure 1 shows a first and a second subscribers SUBa, SUBb able to communicate with each other in an IP network comprising a switch SS and an application server MS. In particularly, the switch SS is a softswitch, a call-stateful one.

The application server MS may preferably be a media server or any other server able to store multimedia data. The media server MS, the softswitch SS and the subscribers SUBa, SUBb are able to support SIP protocol and/or H323 protocol or other type of multimedia protocol such as, for example, MGCP protocol.

The softswitch SS is connected, via LDAP protocol P2, to an LDAP server LS containing subscriber information for authentication purposes. In a further embodiment of the present invention, the LDAP server LS may be included within the softswitch SS.

The connections connecting the IP network to the subscribers SUBa, SUBb, to the softswitch SS and to the media server MS are established over SIP protocol or H323 protocol, denoted as protocol P1, depending if the subscribers SUBa, SUBb are of SIP-type or H323-type.

A single softswitch machine SS may be able to support both H232 and SIP protocols P1. Advantageously, the softswitch supplier is able to activate, at the operator site, upon request, the use of one or of both protocols. The protocol activation may conveniently be implemented through the use of license files which activate the respective software programs. In a further embodiment according to the present invention, separate hardware equipment may be used, a SIP softswitch machine and a H323 machine.

The subscribers SUBa, SUBb may be soft-clients, i.e. software programs installed on PCs, e.g. X-ten, OptiClient, Sigma, or VoIP phone terminals or any other devices able to establish VoIP calls and having a display for showing text and/or video content.

The example embodiment shown in Figure 1 illustrates the IP network scenario with VoIP subscribers SUBa, SUBb. In a further embodiment according to the present invention, the communication network may be a TDM network, the switch may be a TDM exchange and the subscribers may be ISDN, VoDSL or other similar type of subscribers. In the context of the present invention, VoDSL subscribers may be considered IP subscribers or pure TDM subscribers depending if they have a connection, via an interface, to the IP network or not.

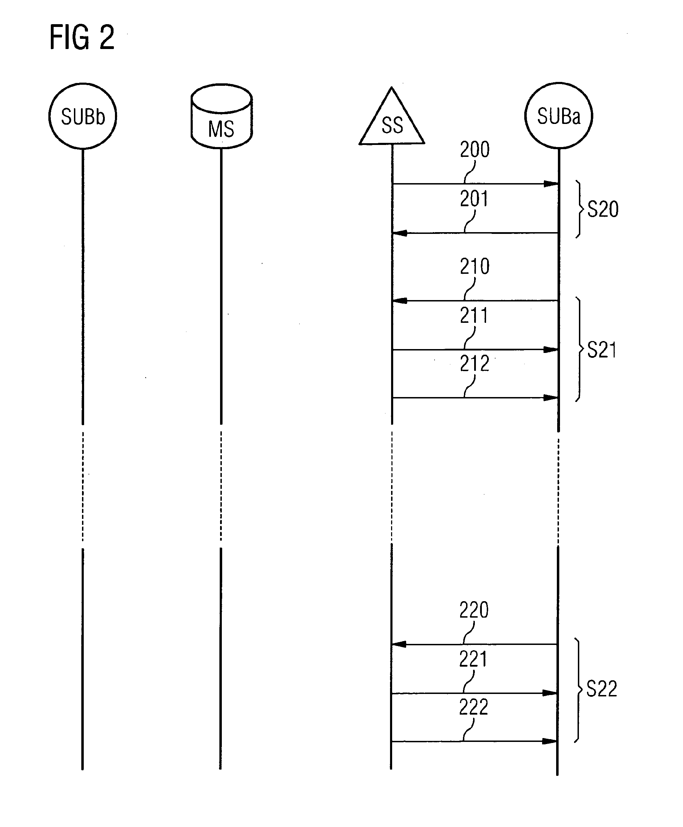

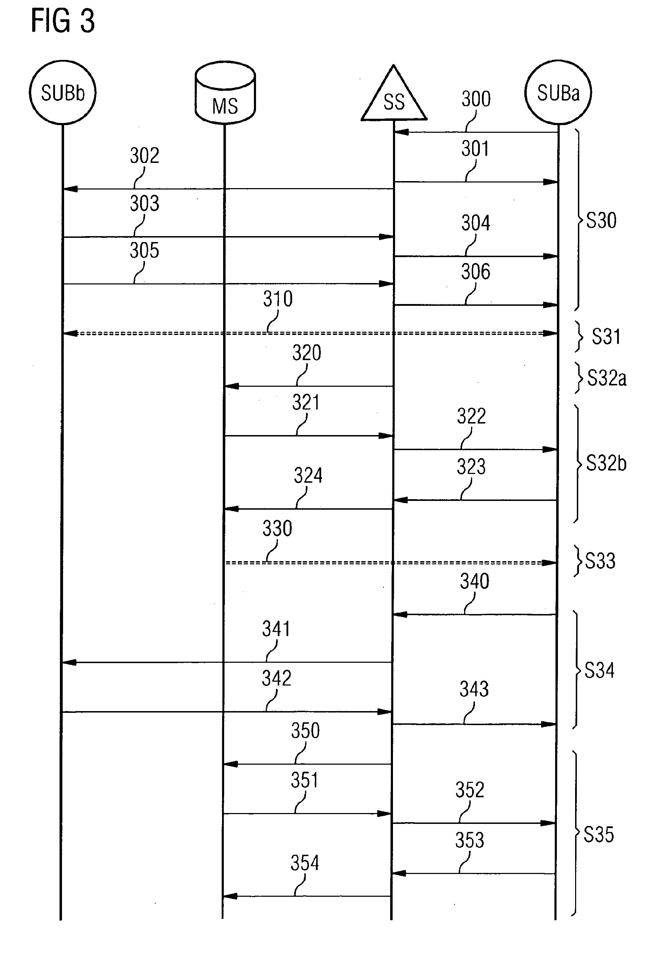

Figure 2 and Figure 3 illustrate SIP messaging sequences, in further example embodiments according to the present invention, in which SIP protocol is used as a communication protocol among the subscriber SUBa, SUBb, the media server MS and the softswitch SS,

More in particularly, Figure 2 shows the messaging sequences:
- for providing information about the intra-call multimedia service, in sequence S20;
- for registering to the service, in sequence S20; and
- for de-registering from the service, in sequence S21. While Figure 3 shows the messaging sequences for:

- establishing a voice call, in sequences S30 and S31;
- for notifying the media server MS about the voice call establishment, in sequence S32a;
- for establishing a multimedia session with a registered subscriber SUBa, in sequence S32b;
- for streaming of multimedia data to the registered subscriber SUBa; and
- for releasing of the voice call and of the multimedia session, in sequences S34 and S35.

In SIP sequence S20, the subscriber SUBa is informed about the intra-call multimedia service. The operator informs the subscribers SUBa by sending, from the softswitch SS, a "MESSAGE" SIP method 200 to all the subscribers that are entered within the database of the softswitch. The "MESSAGE" method may preferably contain informational text on the benefits of the intra-call multimedia service for registered subscriber SUBa, e.g. lower phone-call prices, and may also contain guidelines on how to register/de-register to/from such service. Upon receiving the "MESSAGE" method 200, the subscriber automatically responds with a "200 OK" SIP response 201 which is a confirmation on the reception of the "MESSAGE" method 200 from the targeted subscriber SUBa. In further embodiments according to the present invention, the subscribers SUBa, SUBb may be informed via other ways, e.g. by letters or by marketing calls, on the benefits and functionalities of the intra-call multimedia service.

In SIP sequence S21, the subscriber SUBa registers for the intra-call multimedia service. When the user agent client SUBa desires to activate the intra-call multimedia service, it sends to the SIP softswitch SS an "INVITE" SIP method 210 requesting the registration. In order to register to the service, the user dials a registration request code, for example, having the format *<access code>*<pin>#, e.g. *33*1234#; in turn, the subscriber SUBa sends the "INVITE" method 210 with a request to the softswitch SS to establish a service activation session. The softswitch SS replies with a "100 TRYING" SIP response 211 and it accepts the registration request, in case it receives correct authentication data, and it sends, as a registration confirmation, a "200 OK" response 212 to the requesting subscriber SUBa. In case there is a mismatch in the authentication data, the softswitch SS rejects the registration request.

At any point in time the user is enabled to de-register from the intra-call multimedia service. Sequence S22 illustrates the deactivation message sequence which is similar to the activation sequence S21. When the user agent client SUBa desires to de-activate the intra-call multimedia service, it sends to the SIP softswitch SS an "INVITE" SIP method 220 requesting the registration. The user, in order to de-register from the service, dials a de-registration request code, for example, having the format #<access code>*<pin>#, e.g. #33*1234#; in turn, the subscriber SUBa sends the "INVITE" method 220 with a request to the softswitch SS to establish a service de-activation session. The softswitch SS replies with a "100 TRYING" SIP response 221 and it accepts the de-registration request, in case it receives correct authentication data, and it sends, as a de-registration confirmation, a "200 OK" response 222 to the requesting subscriber SUBa. In case there is a mismatch in the authentication data, the softswitch SS rejects the registration request.

In further embodiments according to the present invention, the subscribers SUBa may register/de-register in other ways, e.g. by making a phone call or by sending a letter to the operator with a de-registration/registration request.

In SIP sequences S30, S31, a voice phone call between the two subscribers SUBa, SUBb is established. More in details, the first subscriber SUBa attempts to initiate a phone call with the second subscriber SUBb by sending an "INVITE" SIP method 300 to the softswitch SS. A typical "INVITE" method for establishing a voice call between two subscribers SUBa, SUBb includes identification about the first and second subscribers SUBa, SUBb, identification about the softswitch SS and SDP data. In a phone call "INVITE", the SDP data typically includes an "m" header and the acceptable audio codecs, e.g. G723, G729, G711 (a-law, u-law). The softswitch SS automatically replies to the originating subscriber SUBa with a "100 TRYING" SIP response 301. Then, the softswitch, notifies the second subscriber SUBb about the phone call attempt by sending an "INVITE" method 302. The terminating subscriber SUBb replies with a "180 RINGING" SIP response 303 to the softswitch SS which, in turn, sends a "180 RINGING" SIP response 304 to the originating subscriber SUBa. When the second subscriber SUBb accepts the phone call, it sends a "200 OK" SIP response 305 to the softswitch SS which, in turn, sends a "200 OK" SIP response 306 to the originating subscriber SUBa. The voice communication takes place between the two subscribers SUBa, SUBb, for example, via RTP protocol 310. In a further embodiment according to the present embodiment, it is the second subscriber SUBb that originates the phone call towards the registered subscriber SUBa.

In SIP sequences S32a, S32b, S33, the inter-call multimedia streaming is established. More in detail, the softswitch SS notifies the media server MS that the registered subscriber SUBa is in a phone call, by sending a "NOTIFY" SIP method 320 to open a one way multimedia session.

In a further embodiment according to the present invention, in the "NOTIFY" SIP method 320 may be included an XML body containing subscriber information useful for the customization, according to user profiles, of the multimedia content to be transmitted. In this way, for example, the operator may be able to send specific targeted multimedia content according to user explicit preferences or according to user profiles, e.g. age group, geographical location. In this embodiment, the media server MS and the softswitch SS are capable to parse the XML body.
In a further embodiment according to the present invention, the "NOTIFY" method 320 may be sent from softswitch SS soon after the "INVITE" method 300 sent from the originating subscriber SUBa.

Upon receiving the "NOTIFY" method 320, the media server MS sends to the softswitch an "INVITE(SDP+MC)" SIP method 321 to open a one multimedia gate. The "INVITE(SDP+MC)" SIP method 321, according to the present invention, is a special inventive "INVITE" method since it does not initiate a phone call between two subscribers SUBa, SUBb as it was the case for the "INVITE" 300 sent from the originating subscriber SUBa but it initiates a multimedia session due to the presence of a parameter, denoted as Multimedia Content (MC) parameter, in the "m" header of the SDP.

The newly introduced MC parameter signals that the "INVITE" method 322 has to be automatically answered by the subscriber SUBa since such this signaling effect cannot be achieved via the audio and video codecs of the SDP. In the subscriber SUBb, the soft client or the software of the SIP terminal is updated in order to recognize the MC parameter,
Upon receiving the "INVITE(SDP+MC)" method 321, the softswitch SS sends an "INVITE(SDP+MC)" SIP method 322 to the registered subscriber SUBa which, in turn, replies with a "200 OK(SDP)" SIP response 323 to the softswitch SS. Then, the softswitch sends a "200 OK(SDP)" response 324 to the registered subscriber SUBb so that the multimedia session is opened and the multimedia streaming can start, for example over RTP 330. In a further embodiment of the present invention, the above-mentioned SIP responses 323, 324 are "200 OK(200+MC)" responses in which also the Multimedia Content parameter is included.

In such a way, the two RTP streams, the phone call between the two subscribers SUBa, SUBb, e.g. audio or audio and video streams, and the multimedia streaming from the media-server MS to the registered subscriber SUBb, e.g. video or text stream, are simultaneously open. The operator sends informational content to the registered subscriber SUBb while the subscriber SUBb itself is engaged in a phone call with the second subscriber SUBb. The informational content received by the user at the registered subscriber side may contain a large variety of topics such as news, sport, financial information, entertainment and any other type of advertisement and of informational spot.

The user may enjoy the received multimedia content, while talking on the phone, as if he/she simultaneously watching television or teletext.

The subscriber SUBa may preferably deactivate the audio of the multimedia transmission via the mute option so that the phone call is not disturbed. The audio data is also displayed as subtitles at the bottom of the application. The subscriber SUBa may desire to disable the mute option during the hold-state.

In SIP sequence S34 the phone call is released. The first subscriber SUBa notifies the softswitch SS about the release of the phone call by sending a "BYE" SIP method 340. Then, the softswitch sends a "BYE" method 341 to the second subscriber SUBb which in turn replies to the softswitch SS with a confirmation "200 OK" response 342. Then, the softswitch SS sends a "200 OK" response 343 to the first subscriber SUBa. In a further embodiment according to the present invention, the phone call may be released by the second subscriber SUBb.

At this point, when the phone call is released, also the multimedia session is released as illustrated in sequence S35. To do so, the softswitch SS sends a "NOTIFY" SIP method 350 to the media server MS notifying to stop the transmission of multimedia data. Upon receiving the "NOTIFY" method 350, the media server MS sends a "BYE" method 351 to the softswitch SS which, in turn, sends a "BYE" SIP method 352 to the registered subscriber SUBa. The registered subscriber SUBa responds with a "200 OK" SIP response 353 to the softswitch SS which, in turn, sends a "200 OK" response 354 to the media server MS.

### List of used acronyms

- H323: ITU-T H.323, SERIES H: AUDIOVISUAL AND MULTIMEDIA SYSTEMS "Infrastructure of audiovisual services - Systems and terminal equipment for audiovisual services"
- ISDN: Integrated Services Digital Network
- LDAP: Lightweight Directory Access Protocol
- MC: Multimedia Content
- MGCP: Media Gateway Control Protocol
- RTP: Real-time Transport Protocol
- SDP: Session Description Protocol
- SIP: Session Initiation Protocol
- TDM: Time Division Multiplexing
- UAC: User Agent Client
- XML: Extensible Mark-Üp Language

### List of used reference signs

- 200: "MESSAGE" SIP method
- 201: "200 OK" SIP response
- 210: "INVTTE" SIP method
- 211: "100 TRYING" SIP response
- 212: "200 OK" SIP response
- 220: "INVITE" SIP method
- 221: "100 TRYING" SIP response
- 222: "200 OK" SIP response
- 300: "INVITE" SIP method
- 301: "100 TRYING" SIP response
- 302: "INVITE" SIP method
- 303: "180 RINGING" SIP response
- 304: "180 RINGING" SIP response
- 305: "200 OK" SIP response
- 306: "200 OK" SIP response
- 310: voice call over "RTP"
- 320: "NOTIFY" SIP method
- 321: "INVITE(SDP+MC)" SIP method
- 322: "INVITE (SDP-MC)" SIP method
- 323: "200 OK(SDP)" SIP response
- 324: "200 OK(SDP)" SIP response
- 330: multimedia transmission over "RTP"
- 340: "BYE" SIP method
- 341: "BYE" SIP method
- 342: "200 OK" SIP response
- 343: "200 OK" SIP response
- 350: "NOTIFY" SIP method
- 351: "BYE" SIP method
- 352: "BYE" SIP method
- 353: "200 OK" SIP response
- 354: "200 OK" SIP response
- LS: LDAP server
- MS: application server, media server
- P1: SIP protocol, H232 protocol
- P2: LDAP protocol
- SS: switch, softswitch
- SUBa,SUBb: subscribers
- S20: SIP sequence for performing step g)
- S21: SIP sequence for performing step a)
- S22: SIP sequence for performing step h)
- S30,S31: SIP sequences for performing step b)
- S32a: SIP sequence for performing step c)
- S32b: SIP sequence for performing step d)
- S33: SIP sequence for performing step e)
- S34,S35: SIP sequence for performing step f)

## Claims

1. A method for enhancing voice calls between subscribers (SUBa, SUBb) in a communications system comprising a first subscriber (SUBa), a second subscriber (SUBb), a switch (SS) and an application server (MS);
said method **characterized in that** it comprises the steps of:
a) by at least one of the subscribers (SUBa), registering to an intra-call multimedia service (S21);
b) establishing, through the switch (SS), a voice call (S30, S31) between the subscribers (SUBa, SUBb), said subscribers (SUBa, SUBb) comprising at least one registered subscriber (SUBa);
c) by the switch (SS), notifying the application server (MS) about the voice call establishment (S32a) ;
d) by the application server (MS), establishing a multimedia session (S32b) with the at least one registered subscriber (SUBa);
e) by the application server (MS), streaming of multimedia data (S33) to the al least one registered subscriber (SUBa) within the established multimedia session; and
f) releasing of the voice call and of the multimedia session (S34, S35).

2. The method according to claim 1, further comprising the step of:
g) by the switch (SS), sending information to at least one subscriber (SUBa, SUBb) about the intra-call multimedia service (S20).

3. The method according to any of the preceding claims, wherein the subscribers (SUBa, SUBb) are SIP or HS323 subscribers and wherein the voice call is a VoIP call.

4. The method according to any of the preceding claims, wherein the subscribers (SUBa, SUBb) are ISDN or VoDSL subscribers.

5. The method according to any of the preceding claims, wherein the voice call is a voice-video call.

6. The method according to any of the preceding claims, wherein the content of the multimedia data is selected from the group consisting of:
- informational content;
- recreational content;
- advertising content.

7. The method according to any of the preceding claims, wherein said step d) is performed via SIP protocol and wherein said switch (SS) is a SIP softswitch; and wherein said step d) comprises the sub-steps of:
d1) by the application server (MS), sending to the softswitch (SS) a "INVITE" SIP method (321) comprising in its SDP part a multimedia content parameter;
d2) by the softswitch (SS), sending to the at least one registered subscriber (SUBa) a "INVITE" SIP method (322) comprising in its SDP part a multimedia content parameter;
d3) by the at least one registered subscriber (SUBa), responding to the softswitch with a "200 OK" SIP response (323).

8. The method according to any of the preceding claims, further comprising the step of:
h) by the registered subscriber (SUBa), de-registering from the intra-call multimedia service (S22).

9. A system having means for performing the steps of the method according to any of the claims 1 to 8.
